# EUROPÄISCHE PATENTSCHRIFT

(11) **EP 3 534 010 B1**
(45) Veröffentlichungstag und Bekanntmachung des Hinweises auf die Patenterteilung: **09.12.2020**
(21) Anmeldenummer: 19155475.7
(22) Anmeldetag: 05.02.2019
(51) Int. Cl.: F04D 23/00, F04D 29/08, F04D 29/42, F04D 29/70, F23J 15/02

(54) **VERBRENNUNGSLUFTGEBLÄSE**
COMBUSTION AIR FAN
VENTILATEUR D'AIR DE COMBUSTION

(30) Priorität: 28.02.2018 DE 102018104517
(43) Veröffentlichungstag der Anmeldung: 04.09.2019
(73) Patentinhaber: Eberspächer Climate Control Systems GmbH, 73730 Esslingen (DE)
(72) Erfinder: Humburg, Michael, 73035 Göppingen (DE); Jensen, Hans, 73265 Dettingen (DE)
(74) Vertreter: Ruttensperger Lachnit Trossin Gomoll

(56) Entgegenhaltungen:
- WO-A1-00/06288
- DE-A1- 4 345 056
- DE-A1-102012 211 640
- DE-U1-202008 000 097

## Beschreibung

Die vorliegende Erfindung betrifft ein Verbrennungsluftgebläse, welches beispielsweise dazu eingesetzt werden kann, in einem brennstoffbetriebenen Fahrzeugheizgerät die zur Verbrennung erforderliche Luft in eine Brennkammer des Fahrzeugheizgerät zu fördern.

Bei Kraftfahrzeugen, insbesondere auch mit brennstoffbetriebenen Fahrzeugheizgeräten ausgestatteten Kraftfahrzeugen, besteht grundsätzlich die Anforderung, dass bei einem sogenannten SHED-Test im Stillstand eines derartigen Fahrzeugs, also bei abgestelltem Motor und auch abgestelltem Fahrzeugheizgerät, nur eine sehr begrenzte Menge an Kohlenwasserstoff von beispielsweise etwa 0,05g in die Umgebung abgegeben werden darf. Da brennstoffbetriebene Fahrzeugheizgeräte häufig mit einem porösen Verdampfermedium ausgestattet sind, welches flüssigen Brennstoff aufnimmt und diesen in gasförmigem Aggregatzustand in eine Brennkammer abgibt, besteht grundsätzlich das Problem, dass auch bei Beendigung des Verbrennungsbetriebs noch flüssiger Brennstoff in dem Verdampfermedium vorhanden ist und vor allem bei von einem vorangehenden Verbrennungsbetrieb noch erwärmtem Verdampfermedium abdampft, also in gasförmigem Aggregatzustand abgegeben wird. Dabei besteht grundsätzlich die Gefahr, dass über ein stromaufwärts einer Brennkammer und somit auch eines derartigen als Quelle für gasförmigen Kohlenwasserstoff wirksamen Verdampfermediums angeordnetes Verbrennungsluftgebläse im Stillstand eines Kraftfahrzeugs und bei deaktiviertem Fahrzeugheizgerät gasförmiger Kohlenwasserstoff in derartiger Menge nach außen abgegeben wird, dass die gesetzlichen Vorgaben nicht eingehalten werden können.

Die WO 00/06288 A1 offenbart ein Gebläse mit einem in einem Gehäuse drehbaren und eine Mehrzahl von sternartig angeordneten Förderschaufeln umfassenden Förderrad. An den Förderschaufeln oder im Inneren des Gehäuses können von der zu fördernden Luft durchströmbare Filterelemente vorgesehen sein, um in der Luft mitgeführte Partikel oder Feuchtigkeit beim Durchströmen der Filterelemente an diesen zu sammeln.

Die DE 10 2012 211 640 A1 offenbart ein brennstoffbetriebenes Fahrzeugheizgerät mit einer beispielsweise als Seitenkanalgebläse ausgebildeten Verbrennungsluftzuführanordnung.

Die DE 20 2008 000 097 U1 offenbart ein mobiles Heizgerät mit einer BrennluftZuführung. Die durch die Brennluftzuführung geleitete Luft wird durch einen Schalldämpfer hindurchgeleitet, welcher ein kohlenwasserstoffspeicherndes Element enthält.

Es ist die Aufgabe der vorliegenden Erfindung, ein Verbrennungsluftgebläse, insbesondere Seitenkanalgebläse, für ein brennstoffbetriebenes Fahrzeugheizgerät vorzusehen, mit welchem die Abgabe von gasförmigem Kohlenwasserstoff zur Umgebung verhindert werden kann.

Erfindungsgemäß wird diese Aufgabe gelöst durch ein Verbrennungsluftgebläse, insbesondere Seitenkanalgebläse, für ein brennstoffbetriebenes Fahrzeugheizgerät gemäß Anspruch 1. Dieses Verbrennungsluftgebläse umfasst ein Gebläsegehäuse, wobei in dem Gebläsegehäuse ein von zu fördernder Verbrennungsluft durchströmbarer Luftströmungsraum gebildet ist und über einen Eintrittsbereich in den Luftströmungsraum strömende Luft zu einem ein Förderrad umfassenden Förderbereich strömt, wobei in dem Luftströmungsraum wenigstens ein Kohlenwasserstoffspeicherelement zur Speicherung von im Luftströmungsraum vorhandenem gasförmigem Kohlenwasserstoff angeordnet ist.

Durch das Vorsehen wenigstens eines Kohlenwasserstoffspeicherelements in dem Volumen, in welchem im Verbrennungsbetrieb Luft in Richtung zu einer Brennkammer gefördert wird, wird sichergestellt, dass bei deaktiviertem Fahrzeugheizgerät und entsprechend deaktiviertem Verbrennungsluftgebläse in dieses Volumen gelangender, gasförmiger Kohlenwasserstoff nicht über das Verbrennungsluftgebläse nach außen abgegeben wird, sondern in dem wenigstens einen Kohlenwasserstoffspeicherelement adsorbiert wird. Wird ein Fahrzeugheizgerät und damit auch das Verbrennungsluftgebläse wieder in Betrieb genommen, wird dieses Volumen wieder von im Wesentlichen keinen Kohlenwasserstoff enthaltender Luft in Richtung zum Fahrzeugheizgerät durchströmt. Dabei wird auch das Kohlenwasserstoff speichernde Kohlenwasserstoffspeicherelement von Luft umströmt und der zunächst noch gespeicherte Kohlenwasserstoff in Richtung zum Fahrzeugheizgerät bzw. zu dessen Brennkammer ausgetragen. Somit wird nicht nur die Kohlenwasserstoffemission eines brennstoffbetriebenen Fahrzeugheizgeräts über ein Verbrennungsluftgebläse im Wesentlichen vollständig unterbunden, sondern es wird dafür gesorgt, dass nach Beendigung des Verbrennungsbetriebs in einem Fahrzeugheizgerät noch vorhandener und in Gasform in Richtung Verbrennungsluftgebläse abgegebener Kohlenwasserstoff in den Verbrennungsprozess eingeführt und somit ein effizienterer Einsatz des in das Fahrzeugheizgerät geförderten Brennstoffs gewährleistet werden kann.

Das Gebläsegehäuse umfasst bei einer erfindungsgemäßen Ausgestaltungsart eine Bodenwand und eine den Luftströmungsraum umgebende Umfangswand. Ferner weist bei einer weiteren erfindungsgemäßen Ausgestaltungsart das Gebläsegehäuse einen wenigstens bereichsweise von dem Luftströmungsraum umgebenen Motorgehäusebereich mit einer Umfangswand und einer Bodenwand auf. Dabei können insbesondere die Bodenwand und die Umfangswand des Gebläsegehäuses mit der Umfangswand des Motorgehäusebereichs als integrales, also als ein Materialblock bereitgestelltes Bauteil aufgebaut sein.

Um eine vergleichsweise große Oberfläche für die Aufnahme von gasförmigem Kohlenwasserstoff bereitzustellen, ist die Umfangswand des Gebläsegehäuses an einer dem Luftströmungsraum zugewandten Innenseite wenigstens bereichsweise durch wenigstens ein Kohlenwasserstoffspeicherelement überdeckt. Vorzugsweise ist dabei die Umfangswand des Gebläsegehäuses im Wesentlichen vollständig durch wenigstens ein Kohlenwasserstoffspeicherelement überdeckt.

Die zur Aufnahme von Kohlenwasserstoff vorgesehene Oberfläche wird dadurch weiter vergrößert, dass die Umfangswand des Motorgehäusebereichs oder/und die Bodenwand des Motorgehäusebereichs an einer dem Luftströmungsraum zugewandten Außenseite wenigstens bereichsweise durch wenigstens ein Kohlenwasserstoffspeicherelement überdeckt ist. Auch hier ist vorzugsweise der Motorgehäusebereich im Wesentlichen vollständig durch wenigstens ein Kohlenwasserstoffspeicherelement überdeckt.

Alternativ oder zusätzlich ist auch die Bodenwand des Gebläsegehäuses an einer dem Luftströmungsraum zugewandten Innenseite wenigstens bereichsweise durch wenigstens ein Kohlenwasserstoffspeicherelement überdeckt, wobei wiederum bei einer besonders vorteilhaften Weiterbildung die Bodenwand des Gebläsegehäuses im Wesentlichen vollständig durch wenigstens ein Kohlenwasserstoffspeicherelement überdeckt sein kann.

Bei einem konstruktiv einfach zu gestaltenden, hinsichtlich der Speicherung von in gasförmigem Aggregatzustand vorhandenem Kohlenwasserstoff besonders effizienten Ausgestaltung kann ein in den Luftströmungsraum eingesetzter Kohlenwasserstoffspeichereinsatz ein Kohlenwasserstoffspeicherelement bereitstellen, wobei der Kohlenwasserstoffspeichereinsatz eine die Bodenwand des Gebläsegehäuses überdeckende erste Einsatz-Bodenwand, eine die Umfangswand des Gebläsegehäuses überdeckende Einsatz-Außenumfangswand, eine die Umfangswand des Motorgehäusebereichs überdeckende Einsatz-Innenumfangswand und eine die Bodenwand des Motorgehäusebereichs überdeckende zweite Einsatz-Bodenwand umfassen kann.

Dabei kann der Aufbau dadurch sehr einfach gestaltet werden, dass der Kohlenwasserstoffspeichereinsatz mit der ersten Einsatz-Bodenwand, der Einsatz-Außenumfangswand, der Einsatz-Innenumfangswand und der zweiten Einsatz-Bodenwand als ein Materialkörper bereitgestellt ist.

Um bei in den Luftströmungsraum eingesetztem Kohlenwasserstoffspeicherelement die Zufuhr von Verbrennungsluft zu dem Förderbereich des Verbrennungsluftgebläses zu ermöglichen, wird vorgeschlagen, dass in dem Kohlenwasserstoffspeichereinsatz ein von zu fördernder Verbrennungsluft durchströmbares Luftströmungsvolumen gebildet ist. Insbesondere kann dabei vorgesehen sein, dass in der Einsatz-Außenumfangswand eine Eintrittsöffnung für zu fördernde Verbrennungsluft vorgesehen ist, oder/und dass in der ersten Einsatz-Bodenwand eine Austrittsöffnung für zu fördernde Verbrennungsluft vorgesehen ist.

Für den vollständigen Abschluss des Luftströmungsraums kann an einem von der Bodenwand des Gebläsegehäuses abgewandten Endbereich der Umfangswand des Gebläsegehäuses ein den Luftströmungsraum abschließendes Abschlusselement vorgesehen sein. Auch das Abschlusselement kann zur Vergrößerung der zur Aufnahme von gasförmigem Kohlenwasserstoff zur Verfügung stehenden Oberfläche an einer dem Luftströmungsraum zugewandten Innenseite wenigstens bereichsweise durch wenigstens ein Kohlenwasserstoffspeicherelement überdeckt sein.

Bei Verwendung eines Kohlenwasserstoffspeichereinsatzes wird weiter vorgeschlagen, dass das Luftströmungsvolumen an einem von der ersten Einsatz-Bodenwand entfernten Endbereich der Einsatz-Außenumfangswand durch das wenigstens eine das Abschlusselement wenigstens bereichsweise überdeckende Kohlenwasserstoffspeicherelement begrenzt ist.

Gemäß einem weiteren Aspekt der vorliegenden Erfindung, welcher sowohl in Verbindung mit der vorangehend beschriebenen Integration wenigstens eines Kohlenwasserstoffspeicherelements in den Luftströmungsraum, als auch losgelöst von diesem Erfindungsaspekt einen eigenständigen Aspekt der vorliegenden Erfindung bildet, kann an dem Gebläsegehäuse ein das Förderrad überdeckender und mit dem Gebläsegehäuse einen Förderradaufnahmeraum begrenzender Gehäusedeckel getragen sein, wobei zwischen dem Gehäusedeckel und dem Gebläsegehäuse ein den Förderradaufnahmeraum im Bereich der Angrenzung des Gehäusedeckels an das Gebläsegehäuse gegen den Austritt von gasförmigem Kohlenwasserstoff dicht abschließendes Dichtelement angeordnet ist. Somit kann alternativ oder zusätzlich auch in diesem Bereich der Austritt von gasförmigem Kohlenwasserstoff aus dem Verbrennungsluftgebläse unterbunden werden.

Bei Ausgestaltung des Verbrennungsluftgebläses nach Art eines sogenannten Seitenkanalgebläses kann der Förderbereich in der Bodenwand des Gebläsegehäuses einen zu einer vom Luftströmungsraum abgewandten Außenseite offenen, ringartigen und von dem Förderrad überdeckten Förderkanal umfassen. Einem derartigen Förderkanal ist eine Eintrittsöffnung zugeordnet, über welche die den Luftströmungsraum durchströmende Verbrennungsluft in den Förderkanal eintreten kann. Unter der Förderwirkung des rotierenden Förderrads wird diese Luft entlang des Förderkanals zu einer von der Eintrittsöffnung durch einen Unterbrecherbereich getrennten Austrittsöffnung gefördert. Über diese Austrittsöffnung kann die Verbrennungsluft dann in Richtung zur Brennkammer eines Fahrzeugheizgerät austreten.

Bei derartiger Ausgestaltung des Verbrennungsluftgebläses wird weiter vorgeschlagen, dass das Dichtelement den Förderkanal ringartig umgebend an einer Außenseite der Bodenwand des Gebläsegehäuses angeordnet ist.

Bei einer kostengünstig zu realisierenden und eine effiziente Speicherung von in gasförmigem Aggregatzustand abgegebenem Kohlenwasserstoff gewährleistenden Ausgestaltung kann wenigstens ein Kohlenwasserstoffspeicherelement mit aktivkohlehaltigem Material aufgebaut sein.

Die Erfindung betrifft ferner ein brennstoffbetriebenes Fahrzeugheizgerät, umfassend einen Brennerbereich, eine flüssigen Brennstoff zu dem Brennerbereich fördernde Brennstoffpumpe sowie ein erfindungsgemäß aufgebautes Verbrennungsluftgebläse.

Die vorliegende Erfindung wird nachfolgend mit Bezug auf die beiliegenden Figuren detailliert beschrieben. Es zeigt:
- Fig. 1: eine prinzipielle Darstellung eines brennstoffbetriebenen Fahrzeugheizgeräts mit einem Verbrennungsluftgebläse;
- Fig. 2: ein gemäß den Prinzipien der vorliegenden Erfindung aufgebautes Verbrennungsluftgebläse in perspektivischer Explosionsdarstellung;
- Fig. 3: eine der Fig. 2 entsprechende Explosionsdarstellung, betrachtet in anderer Blickrichtung.

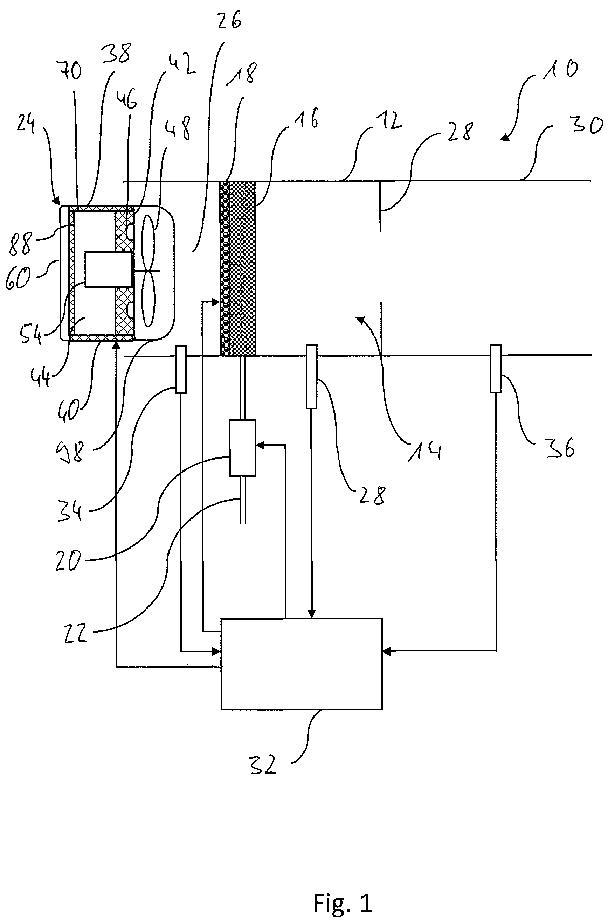

Die Fig. 1 zeigt in prinzipieller Darstellung den Aufbau eines allgemein mit 10 bezeichneten brennstoffbetriebenen Fahrzeugheizgeräts. Das Fahrzeugheizgerät 10 umfasst einen Brennerbereich 12 mit einer in einem Brennkammergehäuse ausgebildeten Brennkammer 14. An einem die Brennkammer 14 begrenzenden Bodenbereich ist bei Aufbau des Brennerbereichs 12 als Verdampferbrenner ein poröses Verdampfermedium 16 vorgesehen, welches beispielsweise als Metallgeflecht, Metallgewirk, Schaumkeramik oder dergleichen ausgebildet sein kann. Zur Abstützung der Brennstoffverdampfung kann dem porösen Verdampfermedium 16 eine elektrisch erregbare Heizeinrichtung 18 zugeordnet sein.

Der für die Verbrennung erforderliche Brennstoff wird vermittels einer Brennstoffpumpe 20, beispielsweise Dosierpumpe, über eine Brennstoffleitung 22 in das poröse Verdampfermedium 16 eingeleitet. Der flüssige Brennstoff verteilt sich in dem Verdampfermedium 16 durch Kapillarförderwirkung und wird als Brennstoffdampf, also in gasförmigem Aggregatzustand, in die Brennkammer 14 abgegeben.

Die für die Verbrennung erforderliche Verbrennungsluft wird durch ein allgemein mit 24 bezeichnetes Verbrennungsluftgebläse zur Brennkammer 14 gefördert. Die von dem Verbrennungsluftgebläse 24 abgegebene Verbrennungsluft gelangt in einen allgemein als Plenum bezeichneten Raum 26 stromaufwärts der Brennkammer 14 und tritt über mehrere beispielsweise in einer die Brennkammer 14 begrenzenden Umfangswandung oder/und einem an dem Bodenbereich vorgesehenen Lufteinleitstutzen in die Brennkammer 14 ein. Das in der Brennkammer 14 gebildete Gemisch aus Verbrennungsluft und Brennstoff wird beispielsweise durch ein elektrisch erregbares Zündorgan 28, beispielsweise Glühstift, gezündet. Die bei der Verbrennung entstehenden Abgase verlassen die Brennkammer 14 über eine Flammblende 28 und strömen entlang eines Flammrohrs 30 in Richtung auf einen nicht dargestellten Wärmetauscherbereich zu.

Das Fahrzeugheizgerät 10 weist ferner eine allgemein mit 32 bezeichnete Ansteueranordnung auf. Diese steuert den Betrieb der Brennstoffpumpe 20 und des Verbrennungsluftgebläses 24 sowie auch der elektrisch erregbaren Heizeinrichtung 18. Hierzu können der Ansteueranordnung 32 von verschiedenen Sensoren, wie z. B. einem Drucksensor 34 und einem Temperatursensor 36, für den Betrieb des Fahrzeugheizgeräts 10 relevante Informationen zugeführt werden.

Es ist darauf hinzuweisen, dass der grundsätzliche Aufbau des Fahrzeugheizgeräts 10 vorangehend anhand eines Beispiels dargestellt wurde und in verschiedensten Aspekten von den dargestellten und vorangehend beschriebenem Aufbau abweichen kann.

Das Verbrennungsluftgebläse 24 ist bei einem derartigen brennstoffbetriebenen Fahrzeugheizgerät allgemein als so genanntes Seitenkanalgebläse aufgebaut. Es umfasst ein Gebläsegehäuse 38, das mit einer Umfangswand 40 und einer Bodenwand 42 einen Luftströmungsraum 44 begrenzt. Über den Luftströmungsraum 44 gelangt die in Richtung Brennkammer 14 zu fördernde Verbrennungsluft zu einem in der Bodenwand 42 ausgebildeten, ringförmigen Förderkanal 46. Dieser ist an einer vom Luftströmungsraum 44 abgewandten Außenseite der Bodenwand 42 von einem nur prinzipiell dargestellten Förderrad 48 überdeckt. Im Förderbetrieb tritt die durch die Förderwirkung des rotierenden Förderrads 48 entlang des Förderkanals 46 geförderte Luft in den Raum 26 und über diesen in die Brennkammer 14 ein.

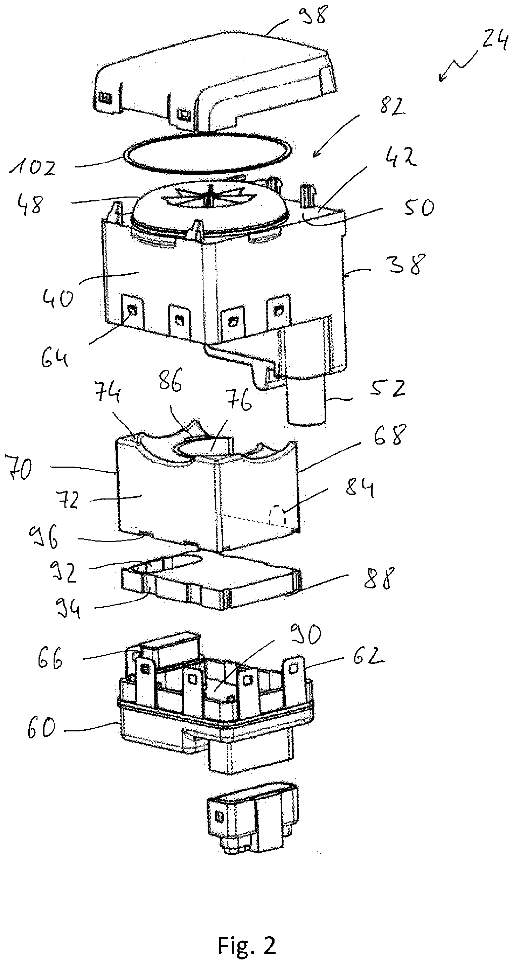

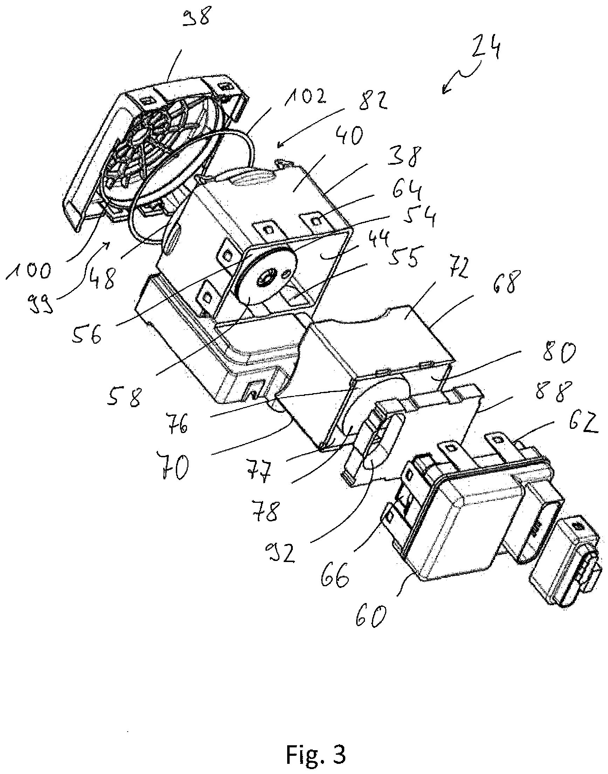

Der Aufbau des Verbrennungsluftgebläses 24 wird nachfolgend mit Bezug auf die Fig. 2 und 3 detaillierter beschrieben. Zu erkennen ist in diesen Figuren das beispielsweise aus Metallmaterial aufgebaute Gebläsegehäuse 38 mit seiner Umfangswand 40 und seiner Bodenwand 42. Der an der Außenseite 50 der Bodenwand 42 ausgebildete Förderkanal 46 ist in den Fig. 2 und 3 unter dem diesen überdeckenden Förderrad 48 nicht zu erkennen. Im Bereich der Umfangswand 40 ist an einer Seite ein rohrartiger Lufteinleitstutzen 52 vorgesehen, welcher über eine in Fig. 3 erkennbare und einen Eintrittsbereich für den Luftströmungsraum 44 bereitstellende Eintrittsöffnung 55 zu dem im Gebläsegehäuse 38 gebildeten Luftströmungsraum 44 offen ist. Über eine in den Figuren nicht erkennbare Öffnung in der Bodenwand 42 des Gebläsegehäuses 38 tritt die den Luftströmungsraum 44 durchströmende Luft in den Förderkanal 46 ein.

Zur Aufnahme eines das Förderrad 48 antreibenden Gebläsemotors, welcher im allgemeinen als Elektromotor ausgebildet ist, ist an dem Gebläsegehäuse 38 ein Motorgehäusebereich 54 vorgesehen. Dieser umfasst eine Umfangswand 56 sowie eine an dem von der Bodenwand 42 des Gebläsegehäuses 38 abgewandten Ende der Umfangswand 56 vorgesehene Bodenwand 58. Es ist darauf hinzuweisen, dass die Umfangswand 56 des Motorgehäusebereichs 54 zusammen mit der Bodenwand 42 und der Umfangswand 40 des Gebläsegehäuses 38 als ein integrales Bauteil, insbesondere Metallgussteil, ausgebildet sein kann. Die Bodenwand 58 des Motorgehäusebereichs 54 kann nach Einsetzen des Gebläsemotors in den von der Umfangswand 56 des Motorgehäusebereichs 54 umgebenden Volumenbereich am axialen Ende, axial bezogen auf eine Drehachse einer Rotorwelle des Gebläsemotors, der Umfangswandung 56 des Motorgehäusebereichs 54 beispielsweise durch Verschraubung, Verrastung oder dergleichen festgelegt werden.

Um den Luftströmungsraum 44 auch an dem von der Bodenwand 42 abgewandten Endbereich der Umfangswand 40 des Gebläsegehäuses 38 abzuschließen, ist ein allgemein mit 60 bezeichnetes Abschlusselement vorgesehen. Dieses kann über eine Mehrzahl von Rastlaschen 62 an entsprechenden Rastvorsprüngen 64 an der Umfangswand 40 verrastet werden. Am Abschlusselement 60 kann die Ansteueranordnung 32 oder zumindest ein Teil derselben, z. B. der der Ansteuerung des Gebläsemotors dienende Teil, vorgesehen sein, wobei beispielsweise über einen in den Luftströmungsraum 44 eingreifenden Steckbereich 66 eine elektrische Verbindung zu dem Gebläsemotor hergestellt werden kann.

Bei deaktiviertem Fahrzeugheizgerät 10 und in dem porösen Verdampfermedium 16 noch gespeichertem, flüssigem Brennstoff, also Kohlenwasserstoff, besteht grundsätzlich die Möglichkeit, dass, beispielsweise durch die noch vorhandene Restwärme unterstützt, Brennstoff abdampft und über den an sich zur Einleitung von Verbrennungsluft in die Brennkammer 14 vorgesehenen Strömungsweg in das Verbrennungsluftgebläse 24 und somit insbesondere auch den Bereich des Luftströmungsraums 44 gelangt. Derartiger in gasförmigem Aggregatzustand dann vorliegender Brennstoff bzw. Kohlenwasserstoff könnte über den Lufteinleitstutzen 52 zur Umgebung hin austreten.

Um dies zu verhindern, ist in Zuordnung zu dem Verbrennungsluftgebläse 24 ein allgemein mit 68 bezeichneter Kohlenwasserstoffspeichereinsatz vorgesehen, welcher ein Kohlenwasserstoffspeicherelement 70 bildet. Der Kohlenwasserstoffspeichereinsatz 68 ist beispielsweise mit aktivkohlehaltigem Material aufgebaut und weist in Anpassung an die Gestalt des Gebläsegehäuses 38 eine Einsatz-Außenumfangswand 72 sowie eine erste Einsatz-Bodenwand 74 auf. Die Fig. 2 zeigt, dass die erste Einsatz-Bodenwand 74 so gestaltet ist, dass sie eine an die Kontur der Bodenwand 42 zur Bereitstellung des Förderkanals 46 angepasste Gestalt aufweist und somit die Bodenwand 42 an dieser im Wesentlichen vollflächig anliegend überdecken kann. Die Einsatz-Außenumfangswand 72 ist so gestaltet bzw. geformt, dass sie an einer dem Luftströmungsraum 44 zugewandten Innenseite 77 der Umfangswand 40 im Wesentlichen vollflächig anliegend überdecken kann. In Zuordnung zu dem Motorgehäusebereich 54 weist der Kohlenwasserstoffspeichereinsatz 68 eine von der ersten Einsatz-Bodenwand 74 sich wegerstreckende Einsatz-Innenumfangswand 76 auf, welche die Umfangswand 56 des Motorgehäusebereichs 54 im Wesentlichen vollständig umgebend überdeckt bzw. an dieser anliegen kann. Zum Überdecken der Bodenwand 58 des Motorgehäusebereichs 54 weist der Kohlenwasserstoffspeichereinsatz 68 eine zweite Einsatz-Bodenwand 78 auf. Somit ist der im Gebläsegehäuse 38 gebildete Luftströmungsraum 44 im Inneren des Gebläsegehäuses 38 im Wesentlichen vollständig durch den Kohlenwasserstoffspeichereinsatz 68 ausgekleidet, der in seinem Inneren ein Luftströmungsvolumen 80 für die zu einem im Wesentlichen durch den Förderkanal 46 in das Förderrad 48 bereitgestellten Förderbereich 82 des Verbrennungsluftgebläses 10 strömende Luft bereitstellt. Um den Eintritt von Luft in das Luftströmungsvolumen 80 im Bereich der Eintrittsöffnung 55 zuzulassen, kann auch in der Einsatz-Außenumfangswand 72 eine entsprechende Eintrittsöffnung 84 vorgesehen sein. Ferner kann in der ersten Einsatz-Bodenwand 74 eine den Eintritt von Luft in den Förderkanal 46 zulassende Austrittsöffnung 86 vorgesehen sein.

Um auch an dem von der Bodenwand 42 des Gebläsegehäuses 38 abgewandten Ende der Umfangswand 40 den Luftströmungsraum 44 bzw. das Luftströmungsvolumen 80 so abzuschließen, dass die Möglichkeit geschaffen ist, Kohlenwasserstoff zu speichern, ist ein weiteres, plattenartiges Kohlenwasserstoffspeicherelement 88 vorgesehen. Dieses ist so gestaltet, dass es das Abschlusselement 60 an seiner dem Luftströmungsraum 44 zugewandten Innenseite 90 im Wesentlichen vollständig überdecken kann und mit einer Öffnung 92 den Hindurchtritt des für die elektrische Kontaktierung des Gebläsemotors in den Luftströmungsraum 44 eingreifenden Steckbereichs 66 ermöglicht. Um eine Anpassung an die Innenkontur des Abschlusselements 60 zu gewährleisten, können in den beiden Kohlenstoffspeicherelementen 70, 88 Aussparungen 94, 96 vorgesehen sein, in welchen auch entsprechende Ausformungen beispielsweise am Abschlusselement 60 eingreifen können.

Durch das Vorsehen von Kohlenwasserstoffspeicherelementen, welche das Gebläsegehäuse 38 im Wesentlichen vollständig auskleiden, wird eine effizient wirkende, sehr große Oberfläche zur Aufnahme von gasförmigem Kohlenwasserstoff bereitgestellt. Der Austritt von gasförmigem Kohlenwasserstoff zur Umgebung hin kann somit weitestgehend unterbunden werden. Bei Wiederaufnahme des Förderbetriebs durchströmt die in Richtung zur Brennkammer 14 zu fördernde Verbrennungsluft das Luftströmungsvolumen 80 und trägt dabei den an den Kohlenwasserstoffspeicherelementen 70, 88 zunächst noch gehaltenen Kohlenwasserstoff ab und führt diesen in den Verbrennungsprozess ein. Da der Kohlenwasserstoffspeichereinsatz 68 so im Luftströmungsvolumen 44 angeordnet ist, dass er die dieses umgrenzenden Oberflächen des Gebläsegehäuses 38 überdeckt, ansonsten jedoch den Innenraum des Gebläsegehäuses 38 gegen Durchströmung im Wesentlichen nicht blockiert, wird durch das Vorsehen des Kohlenwasserstoffspeichereinsatzes 68 im Luftströmungsvolumen 44 im Wesentlichen kein zusätzlicher Strömungswiderstand für die zu fördernde Verbrennungsluft erzeugt.

Die Kohlenwasserstoffspeicherelemente 70, 88 können beispielsweise jeweils aus einem aus Aktivkohlematerial gepressten Körper bestehen. Bei einer alternativen Ausgestaltungsart können die Kohlenwasserstoffspeicherelemente jeweils einen mit porösen Wandungen aufgebauten, und einen Hohlraum zur Aufnahme von Aktivkohlematerial bereitstellenden Trägerkörper umfassen. Bei einer weiteren alternativen Ausgestaltungsart kann ein beispielsweise aus Kunststoffmaterial aufgebauter Trägerkörper an seiner Oberfläche mit Aktivkohlematerial beschichtet sein.

Zwischen dem Förderrad 48 und der Außenseite 50 der Bodenwand 42 des Gebläsegehäuses 38 ist ein im Allgemeinen unvermeidbarer, spaltartiger Zwischenraum vorhanden. Dieser wird auch zum Vermeiden von Druckverlusten möglichst klein gehalten. Gleichwohl kann nicht ausgeschlossen werden, dass auch über einen derartigen spaltartigen Zwischenraum im Stillstand des Verbrennungsluftgebläses 24 bzw. bei deaktiviertem Fahrzeugheizgerät 10 abgedampfter und somit in gasförmigem Aggregatzustand vorliegender Kohlenwasserstoff nach außen austritt. Um auch hier einen im Wesentlichen gasdichten Abschluss bereitzustellen, ist ein das Förderrad 48 überdeckender Gehäusedeckel 98 vorgesehen. Dieser kann durch Verrastung am Gebläsegehäuse 38 festgelegt werden. Zwischen der Außenseite 50 der Bodenwand 42 und einem ringartigen Dichtbereich 100 des Gehäusedeckels 98 wird ein das Förderrad 48 und auch den Förderkanal 46 ringartig umgebendes Dichtelement 102 positioniert. Dieses stellt somit dort, wo der Gehäusedeckel 98 an die Bodenwand 42 des Gebläsegehäuses 38 angrenzt, einen gegen den Austritt von gasförmigem Kohlenwasserstoff dichten Abschluss eines Fördererradaufnahmeraums 99 bereit. Es ist abschließend darauf hinzuweisen, dass das vorangehend mit Bezug auf die Fig. 1 bis 3 beschriebene Verbrennungsluftgebläse in verschiedensten Aspekten variiert werden kann, ohne von den Prinzipien der vorliegenden Erfindung abzuweichen, deren Schutzumfang durch die nachfolgenden Ansprüche bestimmt ist. So könnte beispielsweise der Kohlenwasserstoffspeichereinsatz mehrteilig aufgebaut sein oder/und so gestaltet sein, dass nicht alle den Luftströmungsraum umgrenzenden Oberflächen überdeckt sind.

## Patentansprüche

1. Verbrennungsluftgebläse, insbesondere Seitenkanalgebläse, für ein brennstoffbetriebenes Fahrzeugheizgerät, umfassend ein Gebläsegehäuse (38), wobei in dem Gebläsegehäuse (38) ein von zu fördernder Verbrennungsluft durchströmbarer Luftströmungsraum (44) gebildet ist und über einen Eintrittsbereich (55) in den Luftströmungsraum (44) strömende Luft zu einem ein Förderrad (48) umfassenden Förderbereich (82) strömt, wobei in dem Luftströmungsraum (44) wenigstens ein Kohlenwasserstoffspeicherelement (70, 88) zur Speicherung von im Luftströmungsraum (44) vorhandenem gasförmigem Kohlenwasserstoff angeordnet ist,
wobei das Gebläsegehäuse (38) eine Bodenwand (42) und eine den Luftströmungsraum (44) umgebende Umfangswand (40) umfasst und die Umfangswand (40) des Gebläsegehäuses (38) oder/und die Bodenwand (42) des Gebläsegehäuses (38) an einer dem Luftströmungsraum (44) zugewandten Innenseite (77) wenigstens bereichsweise durch wenigstens ein Kohlenwasserstoffspeicherelement (70) überdeckt ist,
oder/und
wobei das Gebläsegehäuse (38) einen wenigstens bereichsweise von dem Luftströmungsraum (44) umgebenen Motorgehäusebereich (54) mit einer Umfangswand (56) und einer Bodenwand (58) aufweist und die Umfangswand (56) des Motorgehäusebereichs (54) oder/und die Bodenwand (58) des Motorgehäusebereichs (54) an einer dem Luftströmungsraum (44) zugewandten Außenseite wenigstens bereichsweise durch wenigstens ein Kohlenwasserstoffspeicherelement (70) überdeckt ist.

2. Verbrennungsluftgebläse nach Anspruch 1, **dadurch gekennzeichnet, dass** die Umfangswand (40) des Gebläsegehäuses (38) im Wesentlichen vollständig durch wenigstens ein Kohlenwasserstoffspeicherelement (70) überdeckt ist.

3. Verbrennungsluftgebläse nach Anspruch 1 oder 2, **dadurch gekennzeichnet, dass** der Motorgehäusebereich (54) im Wesentlichen vollständig durch wenigstens ein Kohlenwasserstoffspeicherelement (70) überdeckt ist.

4. Verbrennungsluftgebläse nach einem der Ansprüche 1-3, **dadurch gekennzeichnet, dass** die Bodenwand (42) des Gebläsegehäuses (38) im Wesentlichen vollständig durch wenigstens ein Kohlenwasserstoffspeicherelement (70) überdeckt ist.

5. Verbrennungsluftgebläse nach einem der vorangehenden Ansprüche, **dadurch gekennzeichnet, dass** ein in den Luftströmungsraum (44) eingesetzter Kohlenwasserstoffspeichereinsatz (68) ein Kohlenwasserstoffspeicherelement (70) bereitstellt, wobei der Kohlenwasserstoffspeichereinsatz (68) eine die Bodenwand (42) des Gebläsegehäuses (38) überdeckende erste Einsatz-Bodenwand (74), eine die Umfangswand (40) des Gebläsegehäuses (38) überdeckende Einsatz-Außenumfangswand (72), eine die Umfangswand (56) des Motorgehäusebereichs (54) überdeckende Einsatz-Innenumfangswand (76) und eine die Bodenwand (58) des Motorgehäusebereichs (54) überdeckende zweite Einsatz-Bodenwand (78) umfasst.

6. Verbrennungsluftgebläse nach Anspruch 5, **dadurch gekennzeichnet, dass** der Kohlenwasserstoffspeichereinsatz (68) mit der ersten Einsatz-Bodenwand (74), der Einsatz-Außenumfangswand (72), der Einsatz-Innenumfangswand (76) und der zweiten Einsatz-Bodenwand (78) als ein Materialkörper bereitgestellt ist.

7. Verbrennungsluftgebläse nach Anspruch 5 oder 6, **dadurch gekennzeichnet, dass** in dem Kohlenwasserstoffspeichereinsatz (68) ein von zu fördernder Verbrennungsluft durchströmbares Luftströmungsvolumen (80) gebildet ist.

8. Verbrennungsluftgebläse nach Anspruch 5, 6 oder 7, **dadurch gekennzeichnet, dass** in der Einsatz-Außenumfangswand (72) eine Eintrittsöffnung (84) für zu fördernde Verbrennungsluft vorgesehen ist, oder/und dass in der ersten Einsatz-Bodenwand (74) eine Austrittsöffnung (86) für zu fördernde Verbrennungsluft vorgesehen ist.

9. Verbrennungsluftgebläse nach einem der Ansprüche 1-8, **dadurch gekennzeichnet, dass** an einem von der Bodenwand (42) des Gebläsegehäuses (38) abgewandten Endbereich der Umfangswand (40) des Gebläsegehäuses (38) ein den Luftströmungsraum (44) abschließendes Abschlusselement (60) vorgesehen ist, und dass das Abschlusselement (60) an einer dem Luftströmungsraum (44) zugewandten Innenseite (90) wenigstens bereichsweise durch wenigstens ein Kohlenwasserstoffspeicherelement (88) überdeckt ist.

10. Verbrennungsluftgebläse nach Anspruch 5 und Anspruch 9, **dadurch gekennzeichnet, dass** das Luftströmungsvolumen (80) an einem von der ersten Einsatz-Bodenwand (74) entfernten Endbereich der Einsatz-Außenumfangswand (72) durch das wenigstens eine das Abschlusselement (60) wenigstens bereichsweise überdeckende Kohlenwasserstoffspeicherelement (88) begrenzt ist.

11. Verbrennungsluftgebläse nach einem der vorangehenden Ansprüche, **dadurch gekennzeichnet, dass** an dem Gebläsegehäuse (38) ein das Förderrad (48) überdeckender und mit dem Gebläsegehäuse (38) einen Förderradaufnahmeraum (99) begrenzender Gehäusedeckel (98) getragen ist, wobei zwischen dem Gehäusedeckel (98) und dem Gebläsegehäuse (38) ein den Förderradaufnahmeraum (99) im Bereich der Angrenzung des Gehäusedeckels (98) an das Gebläsegehäuse (38) gegen den Austritt von gasförmigem Kohlenwasserstoff dicht abschließendes Dichtelement (102) angeordnet ist.

12. Verbrennungsluftgebläse nach einem der vorangehenden Ansprüche, **dadurch gekennzeichnet, dass** der Förderbereich (82) in der Bodenwand (42) des Gebläsegehäuses (38) einen zu einer vom Luftströmungsraum (44) abgewandten Außenseite (50) offenen, ringartigen und von dem Förderrad (48) überdeckten Förderkanal (46) umfasst.

13. Verbrennungsluftgebläse nach Anspruch 11 und Anspruch 12, **dadurch gekennzeichnet, dass** das Dichtelement (102) den Förderkanal (46) ringartig umgebend an einer Außenseite (50) der Bodenwand (42) des Gebläsegehäuses (38) angeordnet ist.

14. Verbrennungsluftgebläse nach einem der vorangehenden Ansprüche, **dadurch gekennzeichnet, dass** wenigstens ein Kohlenwasserstoffspeicherelement (70, 88) mit aktivkohlehaltigem Material aufgebaut ist.

15. Brennstoffbetriebenes Fahrzeugheizgerät, umfassend einen Brennerbereich (12), eine flüssigen Brennstoff zu dem Brennerbereich (12) fördernde Brennstoffpumpe (20) sowie ein Verbrennungsluftgebläse (24) nach einem der vorangehenden Ansprüche.

## Claims

1. Combustion air blower, especially side channel blower, for a fuel-operated vehicle heater, comprising a blower housing (38), wherein an air flow space (44), through which combustion air being fed can flow, is formed in the blower housing (38), and air flowing over an inlet area (55) into the air flow space (44) flows to a feed area (82) comprising a feed wheel (48), wherein at least one hydrocarbon storage element (70, 88) is arranged in the air flow space (44) for storing gaseous hydrocarbon present in the air flow space (44),
wherein the blower housing (38) comprises a bottom wall (42) and a circumferential wall (40) enclosing the air flow space (44) and the circumferential wall (40) of the blower housing (38) or/and the bottom wall (42) of the blower housing (38) is covered on an inner side (77) facing the air flow space (44) in at least some areas by at least one hydrocarbon storage element (70),
or/and
wherein the blower housing (38) has a motor housing area (54) with a circumferential wall (56) and with a bottom wall (58), which said motor housing area is enclosed in at least some areas by the air flow space (44), and the circumferential wall (56) of the motor housing area (54) or/and the bottom wall (58) of the motor housing area (54) is covered on an outer side facing the air flow space (44) in at least some areas by at least one hydrocarbon storage element (70).

2. Combustion air blower in accordance with claim 1, **characterized in that** the circumferential wall (40) of the blower housing (38) is covered essentially completely by at least one hydrocarbon storage element (70).

3. Combustion air blower in accordance with claim 1 or 2, **characterized in that** the motor housing area (54) is covered essentially completely by at least one hydrocarbon storage element (70).

4. Combustion air blower in accordance with one of the claims 1-3, **characterized in that** the bottom wall (42) of the blower housing (38) is covered essentially completely by at least one hydrocarbon storage element (70).

5. Combustion air blower in accordance with one of the preceding claims, **characterized in that** a hydrocarbon storage insert (68) inserted into the air flow space (44) provides a hydrocarbon storage element (70), wherein the hydrocarbon storage insert (68) comprises a first insert bottom wall (74) covering the bottom wall (42) of the blower housing (38), an insert outer circumferential wall (72) covering the circumferential wall (40) of the blower housing (38), an insert inner circumferential wall (76) covering the circumferential wall (56) of the motor housing area (54), and a second insert bottom wall (78) covering the bottom wall (58) of the motor housing area (54).

6. Combustion air blower in accordance with claim 5, **characterized in that** the hydrocarbon storage insert (68) with the first insert bottom wall (74), with the insert outer circumferential wall (72), with the insert inner circumferential wall (76) and with the second insert bottom wall (78) is provided as a material body.

7. Combustion air blower in accordance with claim 5 or 6, **characterized in that** an air flow volume (80), through which combustion air to be fed can flow, is formed in the hydrocarbon storage insert (68).

8. Combustion air blower in accordance with claim 5, 6 or 7, **characterized in that** an inlet opening (84) for combustion air to be fed is provided in the insert outer circumferential wall (72), or/and that a discharge opening (86) for combustion air to be fed is provided in the first insert bottom wall (74).

9. Combustion air blower in accordance with one of the claims 1-8, **characterized in that** a closing element (60) closing the air flow space (44) is provided at an end area of the circumferential wall (40) of the blower housing (38), which said end area faces away from the bottom wall (42) of the blower housing (38), and that the closing element (60) is covered by at least one hydrocarbon storage element (88) in at least some areas on an inner side (90) facing the air flow space (44).

10. Combustion air blower in accordance with claim 5 and claim 9, **characterized in that** the air flow volume (80) is defined by the at least one hydrocarbon storage element (88) covering the closing element (60) in at least some areas, at an end area of the insert outer circumferential wall (72) located at a distance from the first insert bottom wall (74).

11. Combustion air blower in accordance with one of the preceding claims, **characterized in that** a housing cover (98) covering the feed wheel (48) and defining a feed wheel mounting space (99) with the blower housing (38), is carried at the blower housing (38), wherein a sealing element (102) tightly sealing the feed wheel mounting space (99) in the area in which the housing cover (98) adjoins the blower housing (38) against the discharge of gaseous hydrocarbon is arranged between the housing cover (98) and the blower housing (38).

12. Combustion air blower in accordance with one of the preceding claims, **characterized in that** the feed area (82) in the bottom wall (42) of the blower housing (38) comprises a ring-shaped feed duct (46), which is open towards an outer side (50) facing away from the air flow space (44) and is covered by the feed wheel (48).

13. Combustion air blower in accordance with claim 11 and claim 12, **characterized in that** the sealing element (102) is arranged on an outer side (50) of the bottom wall (42) of the blower housing (38) such that it encloses the feed duct (46) in a ring-shaped manner.

14. Combustion air blower in accordance with one of the preceding claims, **characterized in that** at least one hydrocarbon storage element (70, 88) is made with a material containing activated carbon.

15. Fuel-operated vehicle heater, comprising a burner area (12), a fuel pump (20) feeding liquid fuel to the burner area (12) as well as a combustion air blower (24) in accordance with one of the preceding claims.

## Revendications

1. Ventilateur d'air de combustion, en particulier ventilateur à canal latéral, pour un chauffage de véhicule fonctionnant au carburant, comprenant un boîtier de ventilateur (38), dans lequel un espace d'écoulement d'air (44), à travers lequel l'air de combustion à alimenter peut circuler, est formé dans le boîtier de ventilateur (38), et l'air s'écoulant par une zone d'entrée (55) dans l'espace d'écoulement d'air (44) s'écoule vers une zone d'alimentation (82) comprenant une roue d'alimentation (48), dans lequel au moins un élément de stockage d'hydrocarbure (70, 88) est disposé dans l'espace d'écoulement d'air (44) pour stocker l'hydrocarbure gazeux présent dans l'espace d'écoulement d'air (44),
dans lequel le boîtier de ventilateur (38) comprend une paroi de fond (42) et une paroi circonférentielle (40) enfermant l'espace d'écoulement d'air (44) et la paroi circonférentielle (40) du boîtier de ventilateur (38) et/ou la paroi de fond (42) du boîtier de ventilateur (38) est recouverte sur un côté intérieur (77) faisant face à l'espace d'écoulement d'air (44) au moins par endroits par au moins un élément de stockage d'hydrocarbures (70),
ou/et
dans lequel le boîtier de ventilateur (38) présente une zone de boîtier de moteur (54) avec une paroi circonférentielle (56) et avec une paroi de fond (58), laquelle zone de boîtier de moteur est entourée au moins par endroits par l'espace d'écoulement d'air (44), et la paroi circonférentielle (56) de la zone de boîtier de moteur (54) et/ou la paroi de fond (58) de la zone de boîtier de moteur (54) est recouverte au moins par endroits, sur un côté extérieur tourné vers l'espace d'écoulement d'air (44), par au moins un élément de stockage d'hydrocarbures (70).

2. Ventilateur d'air de combustion selon la revendication 1, **caractérisée en ce que** la paroi circonférentielle (40) du boîtier de ventilateur (38) est recouverte de manière essentiellement complète par au moins un élément de stockage d'hydrocarbures (70).

3. Ventilateur d'air de combustion selon la revendication 1 ou 2, **caractérisée en ce que** la zone de boîtier de moteur (54) est recouverte de manière essentiellement complète par au moins un élément de stockage d'hydrocarbures (70).

4. Ventilateur d'air de combustion selon l'une des revendications 1 à 3, **caractérisée en ce que** la paroi de fond (42) du boîtier de ventilateur (38) est recouverte de manière essentiellement complète par au moins un élément de stockage d'hydrocarbures (70).

5. Ventilateur d'air de combustion selon l'une des revendications précédentes, **caractérisée en ce qu'**un insert de stockage d'hydrocarbures (68) inséré dans l'espace d'écoulement d'air (44) fournit un élément de stockage d'hydrocarbures (70), dans lequel l'insert de stockage d'hydrocarbures (68) comprend une première paroi de fond d'insert (74) recouvrant la paroi de fond (42) du boîtier de ventilateur (38), une paroi circonférentielle extérieure d'insert (72) recouvrant la paroi circonférentielle (40) du boîtier de ventilateur (38), une paroi circonférentielle intérieure d'insert (76) recouvrant la paroi circonférentielle (56) de la zone de boîtier de moteur (54), et une deuxième paroi de fond d'insert (78) recouvrant la paroi de fond (58) de la zone de boîtier de moteur (54).

6. Ventilateur d'air de combustion selon la revendication 5, **caractérisée en ce que** l'insert de stockage d'hydrocarbures (68) avec la première paroi de fond d'insert (74), la paroi circonférentielle extérieure d'insert (72), la paroi circonférentielle intérieure d'insert (76) et la deuxième paroi de fond d'insert (78) est prévu comme un corps de matériau.

7. Ventilateur d'air de combustion selon les revendications 5 ou 6, **caractérisé en ce qu'**un volume d'écoulement d'air (80), à travers lequel l'air de combustion à alimenter peut s'écouler, est formé dans l'insert de stockage d'hydrocarbures (68).

8. Ventilateur d'air de combustion selon la revendication 5, 6 ou 7, **caractérisé en ce qu'**une ouverture d'entrée (84) pour l'air de combustion à alimenter est prévue dans la paroi circonférentielle extérieure d'insert (72), et/ou **en ce qu'**une ouverture de sortie (86) pour l'air de combustion à alimenter est prévue dans la première paroi de fond d'insert (74).

9. Ventilateur d'air de combustion selon l'une des revendications 1 à 8, **caractérisée en ce qu'**un élément de fermeture (60) fermant l'espace d'écoulement d'air (44) est prévu dans une zone d'extrémité de la paroi circonférentielle (40) du boîtier de ventilateur (38), laquelle zone d'extrémité est opposée à la paroi de fond (42) du boîtier de ventilateur (38), et **en ce que** l'élément de fermeture (60) est recouvert par au moins un élément de stockage d'hydrocarbures (88) au moins par endroits sur un côté intérieur (90) orienté vers l'espace d'écoulement d'air (44).

10. Ventilateur d'air de combustion selon la revendication 5 et la revendication 9, **caractérisé en ce que** le volume d'écoulement d'air (80) est défini par ledit au moins un élément de stockage d'hydrocarbures (88) recouvrant l'élément de fermeture (60) au moins par endroits, dans une zone d'extrémité de la paroi circonférentielle d'insert (72) située à une distance de la première paroi de fond d'insert (74).

11. Ventilateur d'air de combustion selon l'une des revendications précédentes, **caractérisée en ce qu'**un couvercle de boîtier (98) recouvrant la roue d'alimentation (48) et définissant un espace de réception de la roue d'alimentation (99) avec le boîtier de ventilateur (38), est porté sur le boîtier de ventilateur (38), un élément d'étanchéité (102) fermant hermétiquement l'espace de montage de la roue d'alimentation (99) dans la zone dans laquelle le couvercle de boîtier (98) se raccorde au boîtier de ventilateur (38) contre la sortie d'hydrocarbure gazeux est disposé entre le couvercle de boîtier (98) et le boîtier de ventilateur (38).

12. Ventilateur d'air de combustion selon l'une des revendications précédentes, **caractérisé en ce que** la zone d'alimentation (82) dans la paroi de fond (42) du boîtier de ventilateur (38) comprend un canal d'alimentation (46) de forme annulaire, qui est ouvert vers un côté extérieur (50) opposé à l'espace d'écoulement d'air (44) et est recouvert par la roue d'alimentation (48).

13. Ventilateur d'air de combustion selon la revendication 11 et la revendication 12, **caractérisé en ce que** l'élément d'étanchéité (102) est disposé sur un côté extérieur (50) de la paroi de fond (42) du boîtier de ventilateur (38) de telle sorte qu'il entoure le canal d'alimentation (46) de manière annulaire.

14. Ventilateur d'air de combustion selon l'une des revendications précédentes, **caractérisée en ce qu'**au moins un élément de stockage d'hydrocarbures (70, 88) est fabriqué avec un matériau contenant du charbon actif.

15. Appareil de chauffage de véhicule fonctionnant au carburant, comprenant une zone de brûleur (12), une pompe à carburant (20) alimentant en carburant liquide la zone de brûleur (12) ainsi qu'un ventilateur d'air de combustion (24) selon l'une des revendications précédentes.
